# EUROPÄISCHE PATENTSCHRIFT

(11) **EP 3 129 931 B1**
(45) Veröffentlichungstag und Bekanntmachung des Hinweises auf die Patenterteilung: **12.06.2019**
(21) Anmeldenummer: 15716462.5
(22) Anmeldetag: 01.04.2015
(51) Int. Cl.: B60L 53/00, B64C 39/02, B64D 1/22, B64D 45/08, A47G 29/14, B64F 1/04, B65G 67/00, G06Q 10/08, G06Q 50/28, G07F 17/12

(54) **VERFAHREN ZUM ÜBERBRINGEN EINER SENDUNG DURCH EINE UNBEMANNTE TRANSPORTEINRICHTUNG**
METHOD FOR DELIVERING A SHIPMENT BY AN UNMANNED TRANSPORT DEVICE
PROCÉDÉ DE REMISE D'UN ENVOI PAR L'INTERMÉDIAIRE D'UN MOYEN DE TRANSPORT SANS PILOTE

(30) Priorität: 11.04.2014 DE 102014105196
(43) Veröffentlichungstag der Anmeldung: 15.02.2017
(73) Patentinhaber: Deutsche Post AG, 53113 Bonn (DE)
(72) Erfinder: OGILVIE, Thomas, 53179 Bonn (DE); PRUSKI, Matthäus, 53844 Troisdorf (DE); BENZ, Ramin, 53229 Bonn (DE)
(74) Vertreter: Michalski Hüttermann & Partner Patentanwälte mbB
(86) Internationale Anmeldenummer: PCT/EP2015/057152
(87) Internationale Veröffentlichungsnummer: WO 2015/155087

(56) Entgegenhaltungen:
- DE-A1-102007 003 458
- US-A1- 2003 079 129
- US-A1- 2004 164 847
- US-A1- 2006 011 721
- US-A1- 2008 004 995
- US-A1- 2008 252 417
- US-A1- 2011 084 162
- US-A1- 2014 024 999
- US-A1- 2014 032 034
- US-B1- 6 300 873
- US-B1- 7 158 941
- KOJI A O SUZUKI ET AL: "Automatic Battery Replacement System for UAVs: Analysis and Design", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, Bd. 65, Nr. 1 - 4, 9. September 2011 (2011-09-09), Seiten 563-586, XP019989902, ISSN: 1573-0409, DOI: 10.1007/S10846-011-9616-Y

## Beschreibung

Die Erfindung betrifft ein Verfahren zum Überbringen einer Sendung durch eine unbemannte Transporteinrichtung an einem Aufnahmebehälter für die Sendung, mit dem Schritt Bewegen der unbemannten Transporteinrichtung zu dem Aufnahmebehälter auf Basis von Geokoordinaten. Zudem betrifft die Erfindung die unbemannte Transporteinrichtung sowie den Aufnahmebehälter, jeweils eingerichtet zur Durchführung des Verfahrens.

Infolge steigender Güterverkehre, wie Stück- und Sammelgutfahrten über LKW Transporte oder Containertransporte durch See- oder Luftfracht und den Transport von Paketen bei der Nutzung von beispielsweise E-Commerce sowie Online-Versand-handelsangeboten, hat sich die Anzahl von Transportgütern und dabei insbesondere von Paketsendungen signifikant erhöht. Während eine Bestellung unabhängig von herkömmlichen Ladenöffnungszeiten getätigt werden kann, erfolgt die Auslieferung der Bestellung als Sendung an den Besteller jedoch immer noch mittels klassischer Zustellverfahren, so beispielsweise durch Briefträger oder, im Falle von Paketsendungen, durch motorisierte Zustellfahrzeuge. Dabei erfolgt ein Auslieferungsversuch der Sendung an den Besteller in der Regel nur einmal pro Tag. Ist der Besteller zum Zeitpunkt des Auslieferungsversuches nicht anzutreffen, so beispielsweise, weil er als Berufstätiger seiner Arbeit nachgeht, wird entweder versucht, die Sendung noch ein weiteres Mal zuzustellen, oder die Sendung wird in einer Filiale des Zustellunternehmens zur Abholung durch den Besteller hinterlegt.

Die Abholung der derart hinterlegten Sendung in der Filiale des Zustelldienstes stellt den Besteller jedoch nicht selten vor eine neue Herausforderung, da die Abholung in der Regel innerhalb der Öffnungszeiten der Filiale, währenddessen der Besteller seiner Berufstätigkeit nachzugehen hat, erfolgen muss. Alternativ besteht zwar die Möglichkeit, die Sendung an Sammelpunkte wie beispielsweise Paketautomaten, so DHL Packstationen oder Amazon Lockers, liefern zu lassen. Diese befinden sich jedoch nicht unmittelbar in der Nähe des Haushalts des Empfängers, und damit nicht im unmittelbaren Verfügungsbereich des Empfängers, und bedingen eine eigenständige Wegeleistung, um die Sendung in den Besitz des Empfängers zu bringen.

US 2004/164847 A1 beschreibt ein System für sicheres Zustellen bestehend aus einem zentralen Steuerungssystem mit Mittel zur Generierung eines Sicherheitscodes.

US 2003/079129 A1 beschreibt eine sichere Lagereinheit zur sicheren Abgabe und Lieferung von Waren.

US 2014/032034 A1 beschreibt ein Abgabesystem mit unbemannten Luftabgabefahrzeugen und ein Logistiknetzwerk zur Steuerung und Überwachung.

Ebenfalls gibt es Lösungen, die die Hinterlegung von Sendungen auf dem Grundstück des Empfängers als "safe place", so beispielsweise in Deutschland von DHL als Wunschort angeboten, oder aber an einen designierten Ersatzempfänger, so beispielsweise an einen Nachbarn, zuzustellen. Diese Zustellformen kennzeichnen sich jedoch dadurch, dass der Schutz des Empfangsguts, der Sendung, beispielsweise gegen Witterungseinflüsse oder Diebstahl bei Hinterlegung auf dem Grundstück nicht vollumfänglich sichergestellt werden kann bzw. ein Nicht-Antreffen des designierten Ersatzempfängers keine erfolgreiche Sendungszustellung ermöglicht.

In Summe bedeutet dies, dass zwar durch das Internet die Bestellung eines Produktes äußerst flexibel möglich ist, die Überbringung des Produktes als Paketsendung an den Besteller jedoch immer noch durch Methoden gekennzeichnet ist, die nicht sicherstellen können, dass die Sendung immer direkt am vorgesehenen Zustellort ohne Zugriffsrisiken bereitgestellt werden kann, so dass neue Verfahren zur zeitnaheren, flexibleren Zustellung von Sendungen wünschenswert sind.

Vor diesem Hintergrund ist es Aufgabe der vorliegenden Erfindung, ein Verfahren anzugeben, mittels dessen eine Sendung in flexibler und zeitnaher Weise einem Besteller der Sendung am vorgesehenen Zustellort zugeführt werden kann, ohne dass die Anwesenheit des Empfängers erforderlich ist. Weitere Aufgabe der Erfindung ist Bereitstellung eines entsprechenden Mittels, um die Sendung, unabhängig von Ladenöffnungszeiten und/oder menschlichen Zustellkräften bei der direkten Sendungsübergabe, dem Besteller überbringen zu können. Schließlich ist Aufgabe der Erfindung das Bereitstellen eines weiteren Mittels, durch welches der Besteller Zugriff auf die derart überbrachte Sendung erlangen kann.

Die Aufgabe der Erfindung wird gelöst durch die Merkmale der unabhängigen Ansprüche. Vorteilhafte Ausgestaltungen sind in den Unteransprüchen angegeben.

Demnach wird die Aufgabe gelöst durch ein Verfahren zum Überbringen einer Sendung durch eine unbemannte Transporteinrichtung an einem Aufnahmebehälter für die Sendung, mit den Schritten:
Bewegen der unbemannten Transporteinrichtung in ein dem Aufnahmebehälter zugeordnetes Zielareal auf Basis von Geokoordinaten,
nach Eintreffen der unbemannten Transporteinrichtung im Zielareal, Pairen der Transporteinrichtung mit dem Aufnahmebehälter,
Austauschen einer elektronischen Berechtigungsinformation zwischen dem Aufnahmebehälter und der unbemannten Transporteinrichtung,
Prüfen der Berechtigungsinformation hinsichtlich einer Berechtigung durch den Aufnahmebehälter,
bei Berechtigung, Aktivieren einer Übergabeeinrichtung für die Sendung durch den Aufnahmebehälter, und
Übergeben der Sendung von der unbemannten Transporteinrichtung an die Übergabeeinrichtung oder von der Übergabeeinrichtung an die unbemannte Transporteinrichtung durch die unbemannte Transporteinrichtung, durch die Übergabeeinrichtung und/oder durch den Aufnahmebehälter, sowie insbesondere
Wegbewegen der unbemannten Transporteinrichtung von dem Aufnahmebehälter, und/oder
Deaktivieren der Übergabeeinrichtung.

Um eine flexible Auslieferung einer Sendung an einen Besteller oder Empfänger der Sendung zu bewerkstelligen, wird erfindungsgemäß vorgeschlagen, die Sendung durch eine unbemannte Transporteinrichtung zu überbringen, so also beispielsweise von einem Absender, einem Logistikdienstleister, einer Auslieferungseinrichtung, oder einer Verteilstelle, mittels der unbemannten Transporteinrichtung hin zum Aufnahmebehälter, oder in entgegengesetzter Richtung, zu transportieren. Die Sendung kann dazu grundsätzlich beliebig ausgestaltet sein, so beispielsweise als Postsendung, als Paket, als Einschreiben, als Brief oder sonstiges transportables Gut. Bevorzugt werden die vorgeschlagenen Schritte in der genannten Reihenfolge ausgeführt, wobei es jedoch auch möglich ist, dass die vorgeschlagenen Schritte in geänderter Reihenfolge abgearbeitet werden. Ebenso ist es möglich, dass das Verfahren nur einen Teil der Schritte aufweist, so beispielsweise ohne den letzten oder die beiden vorletzten Schritte ausgeführt werden kann.

Die unbemannte Transporteinrichtung ist vorzugsweise als Fluggerät, als unbemanntes Luftfahrzeug, englisch unmanned, uninhabited oder unpiloted aerial vehicle, abgekürzt UAV, als Paketkopter und/oder als Drohne ausgestaltet. Mögliche Ausprägungsformen des unbemannten Fluggerätes bzw. UAV können Helikopter, Multikopter, so beispielsweise Quadrokopter oder Tiltwing, sein, um nur einige Möglichkeiten aufzuzählen. Wenn im Rahmen der Erfindung von Fluggerät oder Drohne gesprochen wird, so sind ebenso alle möglichen Ausprägungsformen sowie UAV etc., wie oben ausgeführt, gemeint. Weiter bevorzugt weist die unbemannte Transporteinrichtung mechanische und/oder informationstechnologische Eigenschaften, nachfolgend "Intelligenz" genannt, auf, die die unbemannte Transporteinrichtung zur Ausführung des Verfahrens befähigt. Dazu ist die "Intelligenz" vorzugsweise ausgestaltet, einerseits ein automatisches Verhalten und/oder andererseits ein autonomes Verhalten der Transporteinrichtung, sowie des Aufnahmebehälters, zur Ausführung des vorgeschlagenen Verfahrens zu gewährleisten. Die Intelligenz kann als Mikroprozessor, als Steuerungseinrichtung und/oder speicherprogrammierbare Steuerung ausgestaltet sein, jeweils vorzugsweise mit einem entsprechenden Softwareprogramm zur Ausführung der Verfahrensschritte, und über Kommunikationseinrichtungen zur drahtgebundenen und/oder drahtlosen Kommunikation beispielsweise mit dem Aufnahmebehälter ausgestaltet sein. Ferner kann die Transporteinrichtung über Sensoren verfügen, die die optische, akustische, olfaktorische und/oder datensignalbasierte Identifikation und Interpretation von Umweltsignalen ermöglichen und/oder über mechanische Komponenten, die die autonome Bewegung im Raum hin bzw. weg zum Aufnahmebehälter sowie die für die Übergabe und/oder Übernahme des Sendung notwendigen Komponenten enthalten.

Entsprechend der Ausgestaltung der Transporteinrichtung kann sich eine maximale Dimensionierung, Auslegung und/oder Gewicht der zu überbringenden Sendung definieren. Der Aufnahmebehälter ist vorzugsweise dem Empfänger der Sendung zugeordnet, so exemplarisch im Vorgarten oder auf dem Dach eines Hauses des Empfängers angeordnet. Ebenso kann ein einziger Aufnahmebehälter einer Mehrzahl von Empfängern zugeordnet sein, so allen Bewohnern eines Mehrfamilienhauses.

In einer exemplarischen Ausgestaltung kann eine als Drohne ausgestaltete unbemannte Transporteinrichtung den derart angeordneten Aufnahmebehälter anfliegen, oder im Falle einer fahrenden autonomen Transporteinrichtung anfahren, so durch Bewegen in das Zielareal und bevorzugt Annähern an den Aufnahmebehälter, und dann auf oder an dem Aufnahmebehälter landen bzw. zum Stehen kommen, damit die Sendung von der Drohne an den Aufnahmebehälter übergeben werden kann. Der Empfänger der Sendung kann danach, wie auch bei einem herkömmlichen Briefkasten, die derart in den Verfügungsbereich des Empfängers gelangte Sendung dem Aufnahmebehälter entnehmen.

Da die Transporteinrichtung unbemannt ist, kann das Verfahren unabhängig von jedweden Ladenöffnungszeiten, ohne die schrittweise Begleitung und/oder Steuerung durch Bedienkräfte ausgeführt werden. Das bedeutet, dass durch das erfindungsgemäß vorgeschlagene Verfahren eine Möglichkeit geschaffen wird, Sendungen in äußerst flexibler Weise, so prinzipiell zu jeder Tages- und Nachtzeit, durch die unbemannte Transporteinrichtung hin zum Aufnahmebehälter zu transportieren oder durch die unbemannte Transporteinrichtung von dem Aufnahmebehälter abzuholen. Mit anderen Worten befriedigt das erfindungsgemäß vorgeschlagene Verfahren ein lange bestehendes Bedürfnis, um im Rahmen von E-Commerce und Online-Versandhandel oder in anderen logistischen Kontexten bestellte Waren als Sendung automatisiert und zeitnah nach der Bestellung mittels der unbemannten Transporteinrichtung an den Empfänger zu überbringen bzw. vom Versender der Sendung abzuholen.

Das vorgeschlagene Verfahren ist bevorzugt als computerimplementiertes Verfahren ausgestaltet und durch eine automatische Abarbeitung der vorgeschlagenen Schritte gekennzeichnet. So kann eine zentrale Servereinrichtung vorgesehen sein, die mit der unbemannten Transporteinrichtung und dem Aufnahmebehälter initial und/oder permanent in Kommunikationsverbindung steht. Von der zentralen Servereinrichtung kann die unbemannte Transporteinrichtung Geokoordinaten erhalten, so beispielsweise Längen-, Breitengrad und Höhe über Null des anzusteuernden Aufnahmebehälters, damit in der Folge die unbemannte Transporteinrichtung, so ausgestaltet als Drohne, das dem Aufnahmebehälter zugeordnete Zielareal anfliegen oder fahrend ansteuern kann, sich also in Richtung des Zielareals bewegen kann. Ferner können der Transporteinrichtung weitere Informationen wie beispielsweise 3-D Visualisierungen einer Umgebung im Zielareal und/oder spezifische Informationen in Bezug auf die Ansteuerlogik zum Aufnahmebehälter mitgegeben werden, mittels derer die Transporteinrichtung in der Lage ist, sich in Richtung des Aufnahmebehälters zu bewegen und/oder sich dem Aufnahmebehälter anzunähern. In einer besonders vorteilhaften Ausgestaltung der Erfindung vermag die Transporteinrichtung bei jeder Annäherung an den Aufnahmebehälter relevante Umgebungsinformationen aufzunehmen, zu speichern und mit in der Vergangenheit aufgenommenen Umgebungsinformationen abzugleichen und eventuell zu aktualisieren, sowie diese aktualisierten Umgebungsinformationen an die zentrale Steuereinheit zurückzuspielen.

Bevorzugt verfügt die unbemannte Transporteinrichtung über Mittel zum Erfassen der aktuellen Position sowie zum Navigieren, so beispielsweise ein GPS-, Glonass-, Galileo und/oder Compass-Empfänger zur Positionsbestimmung und Navigation. Das Zielareal umfasst bevorzugt einen kreisrunden oder eckigen Bereich mit einem Durchmesser ≤ 100 m, ≤ 50 m, ≤ 20 m, ≤ 10 m, ≤ 5 m und/oder ≤ 1 m. Besonders bevorzugt ist die geographische Ausdehnung des Zielareals durch die Genauigkeit der durch die unbemannte Transporteinrichtung erfassbaren aktuellen geographischen Position definiert. Beispielsweise beträgt bei GPS die Genauigkeit der Positionsbestimmung ca. 15 m horizontal. Sofern jedoch die Positionsbestimmung der unbemannten Transporteinrichtung über ein vergleichbar ungenaueres Mittel erfolgt, so beispielsweise durch GSM, UMTS oder LTE, ist mit einer weitaus ungenaueren Positionsbestimmung, und dann auch einem geographisch entsprechend größeren Zielareal, zu rechnen. In jedem Fall ist gemäß der vorgeschlagenen Erfindung vorgesehen, dass durch den Schritt Bewegen der unbemannten Transporteinrichtung in ein dem Aufnahmebehälter zugeordnetes Zielareal auf Basis von Geokoordinaten, im Falle einer Drohne, ein Fliegen der Drohne hin zum Aufnahmebehälter bis zum Erreichen des Zielareals, also innerhalb des Zielareals, zu verstehen ist. Die geographische Position des Zielareals wird durch die Geokoordinaten bestimmt. Bevorzugt verfügt die Transporteinrichtung über eine Navigationseinrichtung, die durch Abgleich der aktuellen Position und/oder Straßen- oder Umgebungskarteninformationen mit den anzusteuernden Geokoordination die Transporteinrichtung in das Zielareal navigiert.

Nachdem die unbemannte Transporteinrichtung das Zielareal erreicht hat, also im Zielareal eingetroffen ist, erfolgt das Pairen der Transporteinrichtung mit dem Aufnahmebehälter. Dies kann zum Beispiel durch Erfassen eines Ortungssignals erfolgen, das vom Aufnahmebehälter ausgesendet wird. Weiter bevorzugt umfasst der Schritt Pairen der Transporteinrichtung mit dem Aufnahmebehälter ein Erfassen des durch den Aufnahmebehälter ausgesendeten Ortungssignals durch die unbemannte Transporteinrichtung, und wobei das Verfahren den weiteren Schritt Annähern der unbemannten Transporteinrichtung an den Aufnahmebehälter auf Basis des Ortungssignals aufweist. Das Ortungssignal kann eine gerichtete, elektromagnetische Welle, vorzugsweise nach Art eines "Traktorstrahls", sein. Die Transporteinrichtung verfügt vorzugsweise über ein Mittel zum Erfassen des Ortungssignals, so beispielsweise über einen Landeassistenten, mittels dessen die Position und/oder Lage der Transporteinrichtung bestimmt werden kann, und ist weiter bevorzugt derart ausgestaltet, dass nach Erfassen des Ortungssignals eine weitere, zentimetergenaue Annäherung an den Aufnahmebehälter vorzugsweise bis hin zum Berühren mit dem Aufnahmebehälter stattfinden kann. Ebenso können die Transporteinrichtung und/oder der Aufnahmebehälter über ein optisches Mittel verfügen, mittels deren sich die Transporteinrichtung zielgenau an den Aufnahmebehälter annähern kann, so dass, beispielsweise, eine bildgestützte Landung einer Drohne möglich ist. Ein derartiges optisches Mittel kann einen QR-Code umfassen, der an der Transporteinrichtung und/oder an dem Aufnahmebehälter vorgesehen ist. Ein Erfassen des optischen Mittels kann durch Fotografieren, Filmen und/oder Scannen erfolgen, so beispielsweise durch eine Kamera, welche an der Transporteinrichtung und/oder an dem Aufnahmebehälter vorgesehen ist. Zudem kann das Pairen der Transporteinrichtung mit dem Aufnahmebehälter durch Ultraschall und/oder Radar erfolgen, so durch Ultraschallsensoren und/oder Radarsensoren, durch welche eine Höhenbestimmung, Abstandsmessung und/oder Bodenkontaktmessung der Transporteinrichtung in Bezug auf den Aufnahmebehälter möglich ist. In weiter bevorzugter Ausgestaltung können durch das Pairen, so beispielsweise durch den Traktorstrahl, Informationen zwischen Transportmittel und Aufnahmebehälter ausgetauscht werden. Derart kann der Aufnahmebehälter dem Transportmittel beispielsweise mitteilen, dass der Aufnahmebehälter voll ist, keine Zustellung der Sendung und/oder eine Retoure möglich ist.

Alternativ kann die Transporteinrichtung zunächst ein Initiierungssignal aussenden, das den Aufnahmebehälter dazu veranlasst, seinerseits das Ortungssignal zu senden, was den Vorteil hat, dass hierdurch die permanente Aussendung des Ortungssignals durch den Aufnahmebehälter vermieden wird. Neben dieser autarken Interaktion zwischen Transporteinrichtung und Aufnahmebehälter ist ferner vorstellbar, dass beide Einrichtungen ihrerseits Signale an eine dritte Steuerungsinstanz senden, die dann die Zusammenführung von Transporteinrichtung und Aufnahmebehälter koordiniert. Neben rein datensignalbasierten Pairingoptionen besteht ebenfalls die Möglichkeit, dass die Transporteinrichtung mittels Sensoren den Aufnahmebehälter anhand optischer, akustischer und/oder olfaktorischer Attribute identifiziert. Wie zuvor ausgeführt, ist die Genauigkeit von satellitengestützten Systemen zur Positionsbestimmung durch eine Ungenauigkeit von ca. 15 m oder teils weniger gekennzeichnet. Das bedeutet, dass die Genauigkeit der Positionsbestimmung nicht ausreichend ist, damit eine Drohne, als unbemannte Transporteinrichtung, auf dem Aufnahmebehälter, der beispielsweise, ausgestaltet als Paketkasten eine Grundfläche von 50x50 cm aufweist, zielgenau landen kann, oder im Falle der straßenbasierten Zuführung den Aufnahmebehälter berührend oder bis hin zu einem Abstand kleiner als die Ungenauigkeit der Positionsbestimmung anfahren kann. Damit die Drohne dennoch "zentimetergenau" auf dem Aufnahmebehälter landen oder aufsetzen kann, findet zwischen Aufnahmebehälter und Transporteinrichtung ein wie oben beschriebener Pairing-Prozess statt, der die exakte Annäherung an die Übergabevorrichtung des Aufnahmebehälters ermöglicht.

Mit anderen Worten ist vorgesehen, dass sich die unbemannte Transporteinrichtung zunächst selbstständig und vorzugsweise auch selbststeuernd in Richtung des Aufnahmebehälters bis innerhalb des Zielareals bewegt. Im Zielareal ist die Transporteinrichtung, abhängig von der Genauigkeit der Geokoordinaten und/oder der ermittelten aktuellen geographischen Position, in der Regel noch in einer Distanz von einigen Metern oder Zentimetern von dem Aufnahmebehälter entfernt, so beispielsweise 15 m entfernt. Durch das Pairing von Transporteinrichtung und Aufnahmebehälter, nachfolgend "Ortungsprozess" genannt, wird die Transporteinrichtung in die Lage versetzt, die Distanz zwischen Transporteinrichtung und Aufnahmebehälter weiter zu verringern, bis beispielsweise hin zu einer punktgenauen Landung der Drohne auf dem Aufnahmebehälter. Durch den Ortungsprozess lässt sich also die Ungenauigkeit der auf satellitengestützten Positionsdaten begründeten Positionsbestimmung kompensieren.

Zum Übergeben der Sendung von der unbemannten Transporteinrichtung an den Aufnahmebehälter, oder umgekehrt, wird durch den Aufnahmebehälter vorzugsweise eine Übergabeeinrichtung bereitgestellt. Die Übergabeeinrichtung kann beispielsweise als Öffnung mit einem Ablagefach innerhalb des Aufnahmebehälters ausgestaltet sein, so dass das Aktivieren der Übergabeeinrichtung für die Sendung das Öffnen der Öffnung umfassen kann, damit die Transporteinrichtung die Sendung durch die Öffnung hindurch in das Ablagefach des Aufnahmebehälters übergeben kann. Analog kann das Deaktivieren der Übergabeeinrichtung das Schließen der Öffnung umfassen. Alternativ kann auch ein Element des Aufnahmebehälters statisch am Boden oder an einer Wand verankert sein und ein anderes Teil des Aufnahmebehälters durch die Transporteinrichtung vom Aufnahmebehälter auf Basis von Berechtigungen entnommen werden bzw. auf den statischen Teil des Aufnahmebehälters aufgebracht werden. Vorteilhaft ist hierbei, wenn statischer wie flexibler Teil des Aufnahmebehälters in diesem Fall so miteinander verbunden werden, dass einerseits die unberechtigte Entfernung des flexiblen Teils des Aufnahmebehälter vom statischen Teil des Aufnahmebehälters nicht möglich ist, gleichzeitig aber der flexible Teil des Aufnahmebehälters mit entsprechender Berechtigung der Transporteinrichtung vom statischen Teil entfernt bzw. diesem zugeführt werden kann.

Gemäß dem erfindungsgemäß vorgeschlagenen Verfahren erfolgt jedoch das Aktivieren bzw. Bereitstellen der Übergabeeinrichtung, so exemplarisch das Öffnen der Öffnung, nur, wenn eine Berechtigung vorliegt. Die Berechtigung kann beispielsweise ein Code, so einen Zahlen-, Buchstaben- oder kombinierten Zahlen-/Buchstabencode, oder einen mechanischen, magnetischen, elektromagnetischen und/oder elektronischen Schlüssel umfassen, der zwischen dem Aufnahmebehälter und der unbemannten Transporteinrichtung ausgetauscht wird. So kann die unbemannte Transporteinrichtung beispielsweise über ein Mittel zum Aussenden der Berechtigungsinformation und der Aufnahmebehälter über ein Mittel zum Empfangen der Berechtigungsinformation verfügen. Ebenso kann die Berechtigungsinformation eine mit einem Schlüssel verschlüsselte Kennung der Transporteinrichtung sein. Der Aufnahmebehälter verfügt dann beispielsweise über den gleichen oder einen korrespondierenden Schlüssel, oder kann diesen erzeugen, zur Entschlüsselung der zum Berechtigungsnachweis gegenüber dem Aufnahmebehälter verwendeten verschlüsselten Kennung, und kann dann prüfen, ob die entschlüsselte Kennung mit der Kennung des Aufnahmebehälters übereinstimmt. In einer alternativen Ausgestaltungsvariante ist vorstellbar, dass sowohl die Transporteinrichtung als auch der Aufnahmebehälter ihre jeweilige Berechtigungsinformation über ein Datennetzwerk einer dritten Prüfinstanz zur Verfügung stellen, die anhand der Geokoordinaten von Transporteinrichtung und Aufnahmebehälter zueinander und dem Abgleich der jeweiligen Berechtigungsinformationen miteinander die Berechtigung zum Zugriff auf die Übergabeeinrichtung autorisiert oder ablehnt, wenn zum Beispiel keine hinreichende geografische Nähe zwischen den beiden Instanzen gewährleistet ist.

Ferner kann vorgesehen sein, dass die Berechtigungsinformation, oder der Schlüssel, der jeweiligen Transporteinrichtung, der jeweiligen Sendung und/oder dem jeweiligen Aufnahmebehälter zugeordnet ist. Ebenso kann vorgesehen sein, dass jeder einzelnen Transporteinrichtung ein jeweiliger Schlüssel zugeordnet ist, der jeweils universell für verschiedene Aufnahmebehälter berechtigt. Zudem können die Transporteinrichtung und/oder der Aufnahmebehälter über Kommunikationsmittel verfügen, so beispielsweise ein Mittel zur drahtlosen Kommunikation, über das der Aufnahmebehälter die Berechtigungsinformation erhält, um diese mit der unbemannten Transporteinrichtung auszutauschen, oder aber um eine von der Transporteinrichtung erhaltene Berechtigungsinformation an die Servereinrichtung zwecks Überprüfung der Berechtigungsinformation zu übermitteln. Darüber hinaus ist auch möglich, dass die Berechtigungsinformation in optischer Form vorliegt und insofern ein optischer Abgleich stattfindet,

Sofern nun festgestellt wird, dass die Transporteinrichtung berechtigt ist, aktiviert der Aufnahmebehälter die Übergabeeinrichtung für die Sendung, so dass mittels der Übergabeeinrichtung die Sendung zwischen Transporteinrichtung und Aufnahmebehälter übergeben werden kann. Der Aufnahmebehälter kann dazu ausgebildet sein, eine Mehrzahl von Sendungen durch die Transporteinrichtung zu empfangen, so beispielsweise im Rahmen einer einzelnen Übergabe oder aber im Rahmen mehrerer, nacheinander stattfindender Übergaben, so gegebenenfalls durch unterschiedliche Transporteinrichtungen. Die derart erhaltenen Sendungen sind dann durch den Empfänger bzw. Besteller der Sendung vorzugsweise aus dem Aufnahmebehälter entnehmbar. Andererseits ist der Aufnahmebehälter vorzugsweise derart ausgestaltet, dass, so bei einer Retoure einer Sendung, der Besteller die Sendung in dem Aufnahmebehälter deponieren kann, so dass die Sendung durch den Aufnahmebehälter, insbesondere mittels der Übergabeeinrichtung, an die Transporteinrichtung übergebbar ist. Hierbei ist es entweder möglich, dass die Sendung ohne weitere Umverpackung zwischen Transporteinrichtung und Aufnahmebehälter ausgetauscht wird, oder aber wie oben beschrieben, die Transporteinrichtung flexible Teile dem Aufnahmebehälter zuführen oder entnehmen kann, in denen sich die Sendung befindet.

Ebenso kann vorgesehen sein, dass die Transporteinrichtung eine erste Sendung an die Übergabeeinrichtung übergibt und eine zweite Sendung von der Übergabeeinrichtung an die unbemannte Transporteinrichtung übergeben wird. Nachdem die Übergabe der Sendung oder Sendungen vollzogen ist, bewegt sich die unbemannte Transporteinrichtung von dem Aufnahmebehälter weg, was im Falle einer Drohne beispielsweise bedeutet, dass die Transporteinrichtung von dem Aufnahmebehälter weg fliegt.

Bevorzugt erfolgt beim Bewegen der Transporteinrichtung in das Zielareal und/oder beim Annähern der Transporteinrichtung durch die Transporteinrichtung und/oder den Aufnahmebehälter eine Prüfung, so beispielsweise durch ein Radar, ob sich Menschen bzw. Personen in einem geographischen Umkreis von weniger als 20m, 10m, 5m oder 2m um den Aufnahmebehälter befinden. Erst wenn festgestellt wird, dass sich keine Menschen bzw. Personen in dem Umkreis befinden, erhält die Transporteinrichtung eine Freigabe, sich in das Zielareal zu bewegen bzw. sich dem Aufnahmebehälter anzunähern, so im Falle eines unbemannten Flugobjekts als Transporteinrichtung beispielsweise eine Freigabe, um auf dem Aufnahmebehälter zu landen. Weiter bevorzugt sind die Transporteinrichtung und/oder der Aufnahmebehälter ausgestaltet, während des Bewegens der Transporteinrichtung im Zielareal und/oder beim Annähern der Transporteinrichtung an den Aufnahmebehälter ein akustisches Signal zu erzeugen, um in den Nähe befindlichen Personen zu signalisieren, dass mit einem Eintreffen der unbemannten Transporteinrichtung beim Aufnahmebehälter in Kürze zu rechnen ist. Das akustische Signal kann ein periodischer Piep-Ton und/oder eine Sprachnachricht, wie beispielsweise "Vorsicht - Landeanflug", sein. Ebenso kann beim Entfernen der Transporteinrichtung vom Aufnahmebehälter ein Signal erzeugt werden.

Im Ergebnis wird durch das erfindungsgemäß vorgeschlagene Verfahren ein vollständig automatisierter Ablauf angegeben, mittels dessen eine Sendung durch eine unbemannte Transporteinrichtung hin zu einem Aufnahmebehälter überbracht werden kann oder von dem Aufnahmebehälter abgeholt werden kann, so dass die Sendung in den Verfügungsbereich des Empfängers der Sendung gelangt oder ein Versender eine Sendung aus seinem Verfügungsbereich in Form des Aufnahmebehälters an die Transporteinrichtung übergeben kann, ohne dass es dazu irgendeine Art von menschlicher Interaktion für die Auslieferung beziehungsweise Abholung der Sendung bedarf. So wird es möglich, dass eine durch den Besteller bestellte Ware unmittelbar nach der Bestellung als Sendung an den Empfänger überbracht beziehungsweise von einem Versender abgeholt wird.

Nach einer bevorzugten Weiterbildung weist das Verfahren den Schritt Informieren des Aufnahmebehälters, dass sich die unbemannte Transporteinrichtung in das Zielareal bewegt, und als Reaktion auf die Information Initiieren des Pairens zwischen Transporteinrichtung und Aufnahmebehälter auf. Wie das Informieren stattfinden kann, wurde bereits oben anhand von Beispielen erläutert. So ist insbesondere bevorzugt, dass der Aufnahmebehälter durch ein von der Transporteinrichtung ausgesandtes Signal informiert wird, so beispielsweise durch ein Bluetooth, NFC, GSM und/oder WLAN-Signal. Ebenso kann die zentrale Servereinrichtung, die zur Kommunikation wenigstens mit dem Aufnahmebehälter ausgestaltet ist, den Aufnahmebehälter informieren, dass die unbemannte Transporteinrichtung den Aufnahmebehälter bzw. das Zielareal ansteuert.

Zudem kann der Aufnahmebehälter nicht nur über eine sich annähernde unbemannte Transporteinrichtung informiert werden, sondern auch Informationen darüber erhalten, ob eine Sendung an den Aufnahmebehälter übergeben oder von dem Aufnahmebehälter durch die unbemannte Transporteinrichtung abgeholt werden soll sowie dieser Sendung zugeordnete weitere Attribute wie beispielsweise deren Sendungsidentifikationsnummer oder Information zu speziellen Zuführ- und/oder Entnahmevorgaben bei zum Beispiel zerbrechlichen Gütern. Ebenso kann der Aufnahmebehälter Informationen zu der Sendung erhalten, so beispielsweise zu Größe, Gewicht, Absender- und Empfängerinformationen, wie Name etc. Schließlich kann auch die Berechtigungsinformation an den Aufnahmebehälter gesendet werden, die in der Folge zum Aktivieren der Übergabeeinrichtung verwendet wird. Die Berechtigungsinformation kann ebenso durch den Aufnahmebehälter dahingehend geprüft werden, dass nur bei vorliegender Berechtigung das Initiieren des Ortungsprozesses erfolgt.

Vorzugsweise erfolgt das Initiieren des Ortungsprozess für einen begrenzten Zeitraum oder bis dass die Übergabe der Sendung zwischen Transporteinrichtung und Aufnahmebehälter stattgefunden hat. Danach wird das Ortungssignal, bevorzugt durch den Aufnahmebehälter, wieder abgeschaltet. Im Ergebnis lässt sich durch die vorgeschlagene Ausgestaltung eine Art "Aufweckfunktion" für den Aufnahmebehälter gestalten, so dass dadurch beispielsweise auch ein batteriebetriebener Betrieb des Aufnahmebehälters möglich ist. Derart ausgestaltet, beispielsweise durch das Vorsehen eines photovoltaischen Elements für die Energieversorgung des Aufnahmebehälters, lässt sich der Aufnahmebehälter autark von jeglicher stationärer Energieversorgung installieren.

Grundsätzlich kann das Annähern der unbemannten Transporteinrichtung an den Aufnahmebehälter beliebiger Weise erfolgen, solange in der Folge ein Übergeben der Sendung zwischen Transporteinrichtung und Aufnahmebehälter möglich ist. Nach einer weiteren bevorzugten Ausgestaltung umfasst der Schritt Annähern der unbemannten Transporteinrichtung an den Aufnahmebehälter ein positionsspezifisches Verbinden der unbemannten Transporteinrichtung mit dem Aufnahmebehälter, nachfolgend "Andocken" genannt. Im Falle einer Ausgestaltung der unbemannten Transporteinrichtung als Drohne oder als Fluggerät erfolgt das Andocken vorzugsweise als Landen der Drohne auf oder an dem Aufnahmebehälter bzw. der Übergabeeinrichtung. Dadurch, dass auf dieser bevorzugten Weiterbildung das Annähern als Andocken ausgestaltet ist, kann das Übergeben der Sendung besonders einfach vollzogen werden. Weiter bevorzugt erfolgt durch das Andocken ein physisches Pairing und/oder Berühren von Transporteinrichtung mit Aufnahmebehälter und/oder der Übergabeeinrichtung, oder eine Verkürzung der Distanz zwischen Transporteinrichtung und Aufnahmebehälter seit dem Eintreffen im Zielareal.

Die mechanische, magnetische, elektromagnetische und/oder elektronische Berechtigungsinformation kann grundsätzlich beliebig ausgestaltet sein, wobei nach einer besonders bevorzugten Weiterbildung jedoch vorgesehen ist, dass die elektronische Berechtigungsinformation ein Bluetooth-, WLAN-, GSM-, NFC-, RFID- und/oder elektronisches Funksignal umfasst. In diesem Zusammenhang kann der Aufnahmebehälter ein Berechtigungsprüfmittel zur Prüfung der Berechtigungsinformation aufweisen sowie ein Steuerungsmittel, mittels dessen bei vorliegender Berechtigung die Übergabeeinrichtung für die Sendung bereitgestellt werden kann. Das Berechtigungsprüfmittel kann beispielsweise durch einen Prozessor gebildet werden, so beispielsweise durch einen Mikroprozessor, einen DSP oder ein FPGA.

Ebenso kann das Berechtigungsprüfmittel als Computerprogrammanweisung in einem Speicher des Prozessors gespeichert sein und durch den Prozessor ausgeführt werden, wenn das Computerprogramm mit diesen Anweisungen auf dem Prozessor läuft. Die Berechtigungsinformation kann, wie bereits oben kurz ausgeführt, als Code, so als Zahlen-, Buchstaben- oder kombinierter Zahlen-/Buchstaben-Code ausgestaltet sein, als mechanischer, magnetischer, elektromagnetischer und/oder elektronischer Schlüssel, so als symmetrischer Schlüssel oder als öffentlicher und privater Schlüssel eines asymmetrischen Schlüsselpaares, insbesondere einer PKI-Infrastruktur, oder daraus bestehen. Die Berechtigungsinformation kann zusätzlich oder alternativ verschlüsselte Information umfassen oder daraus bestehen. So kann die Berechtigungsinformation der jeweiligen Sendung, der Transporteinrichtung oder dem Aufnahmebehälter individuell zugeordnet sein.

Nach einer weiteren, besonders bevorzugten Ausgestaltung umfasst das Austauschen der elektronischen Berechtigungsinformation ein Aussenden der elektronischen Berechtigungsinformation durch die unbemannte Transporteinrichtung an den Aufnahmebehälter. Der Aufnahmebehälter empfängt bei dieser Ausgestaltung vorzugsweise die Berechtigungsinformation und vergleicht diese, nach einer weiteren exemplarischen Ausgestaltung, mit einem vorgespeicherten oder separat erhaltenen Schlüssel. Nach einer weiteren bevorzugten Ausgestaltung ist die Berechtigungsinformation auf einer tragbaren elektronischen Einrichtung an der unbemannten Transporteinrichtung gespeichert, so insbesondere auf einem RFID- oder NFC-Tag. Für eine derartige Ausgestaltung kann jeder elektronischen Einrichtung eine andere Berechtigungsinformation, so ein anderer Schlüssel, zugeordnet sein.

Ebenso ist es möglich, dass die Berechtigungsinformation in Abhängigkeit von einer Kennung der unbemannten Transporteinrichtung jeweils erzeugt wird, so durch einen vordefinierten, aber geheimen, Algorithmus. Bei symmetrischer Verschlüsselung kann der Schlüssel oder ein korrespondierender Schlüssel bei asymmetrischer Verschlüsselung anhand der Kennung der unbemannten Transporteinrichtung erzeugt werden. Dadurch ist sichergestellt, dass die Berechtigungsinformation nicht gefälscht oder als einfache Kopie mit einer anderen tragbaren elektronischen Einrichtung verwendet werden kann. Ferner ist es möglich, dass die Berechtigungsinformation zumindest dem Besteller oder Abholer der Sendung mindestens zeitweise, insbesondere für den Zeitpunkt des Nachweises der Berechtigung, zugeordnet ist, so dass der Besteller mittels der Berechtigungsinformation Zugriff auf die an den Aufnahmebehälter übergebene Sendung erhalten kann. Mit anderen Worten kann die Berechtigungsinformation nicht nur verwendet werden, damit die unbemannte Transporteinrichtung mittels der Übergabeeinrichtung Zugang zum Aufnahmebehälter zum Übergeben der Sendung erhält, sondern damit auch ein Abholer der Sendung oder Überbringer der Sendung an den Aufnahmebehälter mittels der Berechtigungsinformation Zugriff auf die Sendung erlangen kann, so die Sendung dem Abholbehälter entnehmen kann oder aber eine Sendung in dem Abholbehälter deponieren kann. Dazu kann die Berechtigungsinformation dem Abholer bzw. Besteller der Sendung übermittelt werden, so als Email-Nachricht, als SMS oder auf sonstige elektronische Weise.

Ebenso ist es möglich, dass der Abholer die Berechtigungsinformation einer Webseite entnimmt, und dann mittels der Berechtigungsinformation Zugriff auf die Sendung an dem Aufnahmebehälter erhält. Bei den RFID- oder NFC-Tags kann es sich um Tags mit eigener Stromversorgung oder um Tags ohne eigene Stromversorgung handeln, welche beispielsweise bei 120-135 kHz, 13,56 MHz oder 865-869 MHz arbeiten. Die Informationsübertragung kann beispielsweise auf kapazitiver Kopplung, induktiver Kopplung oder auf elektromagnetischen Wellen beruhen. So ist es ebenso möglich, dass die Berechtigungsinformation auf einem von einer RFID- oder NFC-Leseeinheit erzeugten hochfrequenten Signal aufmoduliert wird, beispielsweise in Form einer Lastmodulation. RFID- oder NFC-Tags sind beispielsweise gemäß den ISO-Standards 18000, 11784/11785 und/oder dem ISO-IEC-Standard 1443 und 15693 spezifiziert.

Die Prüfung der Berechtigung kann beispielsweise dadurch erfolgen, dass, wie bereits einleitend erwähnt, Berechtigungsprüfmittel, die zum Nachweis der Berechtigung eingesetzte Berechtigungsinformation mit einer in einem Speicher des Aufnahmebehälters gespeicherten Berechtigungsinformation vergleichen. Bei Übereinstimmung oder vordefinierter Korrespondenz der eingesetzten und der gespeicherten Berechtigungsinformation kann das Berechtigungsprüfmittel zu dem Ergebnis kommen, dass eine Berechtigung vorliegt. Die Verarbeitung kann beispielsweise eine Entschlüsselung umfassen oder daraus bestehen, beispielsweise wenn die Berechtigungsinformation eine verschlüsselte Information umfasst oder daraus besteht, die nach Entschlüsselung mit der in dem Aufnahmebehälter gespeicherten Berechtigungsinformation verglichen wird.

Nach einer weiteren besonders bevorzugten Ausgestaltung weist die Berechtigungsinformation eine zeitlich beschränkte Gültigkeit auf, kann also beispielsweise nach Ablauf einer vordefinierten Zeitspanne, die beispielsweise einige Minuten, Stunden, Tage, Wochen oder Monate betragen kann, oder auf einem vordefinierten Gültigkeitszeitpunkt nicht mehr verwendet werden. Dadurch kann sichergestellt werden, dass eine Berechtigungsinformation, die einem unberechtigten Dritten zugänglich gemacht worden ist, automatisch ihre Gültigkeit verliert, so dass dann der unberechtigte Dritte nach Ablauf der Gültigkeit keinen nicht-autorisierten Zugriff auf die Sendung hat.

Zum Ausgestalten der Übergabeeinrichtung existieren grundsätzlich verschiedene Möglichkeiten. Nach einer besonders bevorzugten Ausgestaltung ist jedoch vorgesehen, dass das Aktivieren der Übergabeeinrichtung ein Öffnen einer Öffnung in einem Dach oder einer Seitenwand des Aufnahmebehälters zum Einstellen und/oder Abholen einer Sendung in/aus dem Aufnahmebehälter und/oder ein Ausfahren und/oder Ausklappen einer Andockeinrichtung für die unbemannte Transporteinrichtung umfasst. Weiter bevorzugt ist die Übergabeeinrichtung als Förderband ausgestaltet und/oder umfasst ein Förderband zum Übergeben und/oder Befördern der Sendung. Entsprechend dieser Ausgestaltung kann ein Aktivieren der Übergabeeinrichtung durch ein Einschalten des Förderbands und ein Deaktivieren der Übergabeeinrichtung durch Ausschalten des Förderbands ausgeprägt sein. Nach einer noch bevorzugten Weiterbildung ist die Übergabeeinrichtung automobil, insbesondere mobil ausgestaltet. In diesem Fall kann ein Aktivieren der Übergabeeinrichtung durch ein Bewegen der Übergabeeinrichtung von dem Aufnahmebehälter hin zur Transporteinrichtung erfolgen, welche im Falle eines unbemannten Luftfahrzeugs beispielsweise im Zielareal gelandet ist. Die Übergabeeinrichtung ist bevorzugt automobil ausgestaltet, um sich uneingeschränkt im Zielareal zu bewegen, und verfügt dazu beispielsweise über einen Antrieb und Räder, kann sich also geografisch unabhängig vom Aufnahmebehälter vorzugsweise selbststeuernd, selbstbewegend und/oder autonom bewegen. Eine solche Ausgestaltung ist vorteilig, wenn es sich bei der Transporteinrichtung um ein Fahrzeug handelt, welches nicht in direkten beispielsweise berührenden Kontakt mit dem Aufnahmebehälter treten kann. Ebenso ist eine Ausgestaltung möglich, bei der ein unbemanntes Luftfahrzeugs als Transporteinrichtung die Sendung im Zielareal abwirft, danach die Übergabeeinrichtung sich hin zu der Sendung bewegt und die Sendung aufsammelt, um diese dann zum Aufnahmebehälter zu transportieren. Die Übergabeeinrichtung kann zum Aufsammeln der Sendung ein Staubsaugermittel und/oder über Mittel zum Aufladen eines Akkumulators der Transporteinrichtung aufweisen.

Der Aufnahmebehälter kann grundsätzlich ebenso beliebig ausgestaltet sein, weist jedoch bevorzugt ein rechteckartiges Gehäuse auf, welches durch ein Dach und wenigstens eine Seitenwand gebildet ist. Weiterhin bevorzugt ist der Aufnahmebehälter als Briefkasten, Paketkasten, Paketbriefkasten und/oder Packstation ausgestaltet und beispielsweise vor oder auf dem Haus des Empfängers der Sendung angeordnet. Ebenso kann der Aufnahmebehälter mehrteilig ausgestaltet sein, so beispielsweise zweitteilig, wobei ein erster Teil zur Kommunikation mit der Transporteinrichtung und ein gegebenenfalls vom ersten Teil entfernter zweiter, Teil zur Aufnahme der Sendung ausgestaltet ist. Auch kann der Aufnahmebehälter keinen Behälter oder kein Gehäuse aufweisen, so beispielsweise als Sende- und/oder Empfangseinrichtung zur Kommunikation mit der Transporteinrichtung ausgestaltet sein. Schließlich kann ein erster Teil des Aufnahmebehälters auf einem Dach eines Gebäudes angeordnet sein, so beispielsweise als Landeeinrichtung und/oder Landeplatz für die Transporteinrichtung und ein gegebenenfalls vom ersten Teil entfernter zweiter, Teil zur Aufnahme der Sendung innerhalb des Gebäudes angeordnet sein. Bei diesem Fall können die beiden Teile des Aufnahmebehälters durch ein Förderband und/oder als Rutsche, als Übergabeeinrichtung, zum Transportieren der Sendung zwischen den beiden Teilen miteinander verbunden sein. In der Ausgestaltung als Paketkasten sind innerhalb des Aufnahmebehälters Einrichtungen zur Aufnahme der Sendung vorgesehen, so insbesondere Einrichtungen zur Aufnahme einer Vielzahl von Sendungen, so beispielsweise Pakete. Weiter bevorzugt ist eine Schließ- und/oder Betätigungseinrichtung für die Öffnung bzw. die Andockeinrichtung vorgesehen, die in Abhängigkeit von der Berechtigung ein Öffnen der Öffnung bzw. Ausfahren und/oder Ausklappen der Andockeinrichtung ermöglicht. Im geschlossenen Zustand der Öffnung bzw. eingefahrenen respektive eingeklappten Andockeinrichtung kann ein unberechtigtes Öffnen bzw. Ausfahren respektive Ausklappen durch eine Verriegelungseinrichtung unterbunden werden. Die Öffnung bzw. Andockeinrichtung ist bevorzugt einerseits derart ausgestaltet, dass durch die geöffnete Öffnung hindurch eine Sendung von der unbemannten Transporteinrichtung in einen Innenraum des Aufnahmebehälters herein übergeben werden kann und/oder eine in dem Innenraum des Aufnahmebehälters gelagerte Sendung durch die geöffnete Öffnung hindurch an die unbemannte Transporteinrichtung übergeben werden kann, jeweils bevorzugt dann, wenn die unbemannte Transporteinrichtung sich dem Aufnahmebehälter angenähert hat, ganz besonders bevorzugt, so im Falle einer Drohne, wenn die Drohne auf oder an dem Aufnahmebehälter gelandet ist.

Ebenfalls kann die Übergabe der Sendung mittels der Andockeinrichtung erfolgen. Weiter bevorzugt wird eine mittels Andockeinrichtung an den Aufnahmebehälter übergebene Sendung durch Einfahren bzw. Einklappen der Andockeinrichtung in den Innenraum des Aufnahmebehälters verlagert und dadurch gegen Zugriff unberechtigter Dritter geschützt. Nach einer weiteren bevorzugten Ausgestaltung ist der Aufnahmebehälter ausgestaltet, dass das Öffnen und/oder Schließen der Öffnung bzw. Ausfahren respektive Ausklappen und/oder Einfahren respektive Einklappen der Andockeinrichtung einerseits elektronisch überprüfbar und andererseits an eine entfernte Server- und/oder Kontrolleinrichtung übermittelbar ist.

Wie bereits erwähnt, kann das Übergeben der Sendung von der unbemannten Transporteinrichtung an den Aufnahmebehälter respektive von dem Aufnahmebehälter an die unbemannte Transporteinrichtung grundsätzlich beliebig erfolgen. Nach einer besonders bevorzugten Ausgestaltung ist jedoch vorgesehen, dass das Übergeben der Sendung ein Absenken der Sendung von der unbemannten Transporteinrichtung und/oder ein Anheben der Übergabeeinrichtung und/oder der Sendung durch den Aufnahmebehälter und/oder durch die Übergabeeinrichtung umfasst. Nach einer noch weiteren bevorzugten Ausgestaltung umfasst das Verfahren den Schritt Greifen, Einhaken und/oder Ansaugen der Sendung durch die unbemannte Transporteinrichtung und/oder den Aufnahmebehälter zum Übergeben der Sendung. Durch diese Ausgestaltungen lässt sich die Sendung unversehrt zwischen Transporteinrichtung und Aufnahmebehälter übergeben, so beispielsweise durch ein Absenken der Sendung von der unbemannten Transporteinrichtung hin zum Aufnahmebehälter mittels einer an der Transporteinrichtung vorgesehenen Absenkeinrichtung. Zum Anheben der Sendung kann der Aufnahmebehälter beispielsweise eine Einrichtung aufweisen, die die Sendung, im Falle eines unbemanntes Luftfahrzeugs als Transporteinrichtung, hin zu der auf dem Aufnahmebehälter gelandeten unbemannten Luftfahrzeugs anhebt, so dass dann die Drohne mittels eines Greifarms die Sendung greifen und an dem unbemannten Luftfahrzeug einhaken kann. Sofern nun das unbemannte Luftfahrzeug von dem Aufnahmebehälter weg fliegt, kann die an die Transporteinrichtung übergebene Sendung während des Fluges durch den Greifarm gesichert werden. Der Greifarm kann auch Teil des Aufnahmebehälters sein, so dass das Greifen durch ein Umhüllen der Sendung getätigt werden kann. Ebenso kann das Übergeben der Sendung durch ein Abwerfen der Sendung von der Transporteinrichtung hin zum Aufnahmebehälter erfolgen, so beispielsweise von einem Abstand von 60 bis 80cm zwischen Transporteinrichtung und Aufnahmebehälter. In diesem Fall kann die Übergabeeinrichtung des Aufnahmebehälters als Netz zum Auffangen der Sendung ausgestaltet sein, so beispielsweise als einfahrbares Fangnetz.

Nach einer noch weiter bevorzugten Ausgestaltung weist das Verfahren den Schritt Erfassen, Dokumentieren, Fotografieren, Filmen und/oder Scannen des Übergebens der Sendung zwischen unbemannter Transporteinrichtung und Aufnahmebehälter und/oder der Sendung beim Übergeben der Sendung auf. Durch diesen Schritt lässt sich in reproduzierbarer Weise festhalten, dass einerseits die Sendung übergeben worden ist und/oder andererseits mögliche an der Sendung angebrachte Sendungsdaten erfassen. Mittels eines Kommunikationsverfahrens kann durch die Transporteinrichtung und/oder durch den Aufnahmebehälter das Übergeben der Sendung und/oder beim Übergeben der Sendung erfasste sendungsspezifische Daten der Sendung, so als Dokumentation der Übergabe, an eine entfernte Servereinrichtung übergeben werden. Andererseits ist es auch möglich, dass nach dem Übergeben der Sendung der Aufnahmebehälter, so auf einem an dem Aufnahmebehälter vorgesehenen Display, Informationen zu der durch die Übergabe erhaltenen Sendung anzeigt, so beispielsweise den Namen des Empfängers.

Weiter ist es möglich, dass, beispielsweise durch die Servereinrichtung, die Übergabe der Sendung an den Empfänger mittels des elektronischen Kommunikationsverfahrens, so beispielsweise per SMS, Email oder dergleichen, mitgeteilt wird. Der Empfänger erhält dann eine Information, dass er die Sendung dem Aufnahmebehälter entnehmen kann. Ebenso ist es möglich, dass nach Übergabe der Sendung an die Transporteinrichtung ein Absender einer designierten Sendung informiert wird, dass nunmehr der Aufnahmebehälter Platz zum Aufnehmen der designierten Sendung hat, die nach Übergabe durch den Absender an den Aufnahmebehälter durch die unbemannte Transporteinrichtung, beispielsweise hin zu einem Logistikdienstleister zur weiteren Verteilung, überbracht werden kann.

Nach einer noch weiteren bevorzugten Ausgestaltung weist das Verfahren den Schritt Elektronisches Übermitteln einer Nachricht an den Aufnahmebehälter, dass sich die unbemannte Transporteinrichtung zum Aufnahmebehälter bewegt, und/oder elektronisches Übermitteln einer Übergabenachricht nach erfolgter Übergabe der Sendung durch den Aufnahmebehälter auf. Das elektronische Übermitteln erfolgt vorzugsweise über ein drahtgebundenes und/oder drahtloses Datennetzwerk, so beispielsweise dem Internet oder einem Mobilfunknetz. Der Aufnahmebehälter kann nach einer weiteren Ausgestaltung einen Schlafmodus, in dem elektronische Einrichtungen des Aufnahmebehälters zur Einsparung elektrischer Energie ausgeschaltet sind, und einen Wachmodus, in dem der Aufnahmebehälter das Ortungssignal aussendet und/oder in dem ein Übergeben der Sendung möglich ist, aufweisen.

Durch elektronisches Übermitteln der Nachricht an den Aufnahmebehälter kann der Aufnahmebehälter vom Schlafmodus in den Wachmodus versetzt werden, und nach erfolgter Übergabe wieder in den Schlafmodus versetzt werden. Bei einer derartigen Ausgestaltung verbraucht der Behälter im Schlafmodus wesentlich weniger Energie als im Wachmodus, so dass dadurch der Betrieb des Aufnahmebehälters mittels einer Batterie oder einem Akkumulator denkbar ist. Die Übergabenachricht nach erfolgter Übergabe kann beispielsweise auf einer Webseite publiziert werden, so dass ein Absender der Sendung sich informieren kann, dass die Sendung in den Verfügungsbereich des Empfängers gelangt ist. Ebenso kann nach Übergabe der Sendung an die Transporteinrichtung ein Logistikdienstleister über ein zukünftiges Eintreffen der Transporteinrichtung bei dem Logistikdienstleister informiert werden.

Nach einer weiteren bevorzugten Ausgestaltung ist das Ortungssignal als bzw. erfolgt das Pairen durch einen Leitstrahl, durch ein Instrumentenlandesystem und/oder als horizontales und vertikales Führungssignal ausgestaltet. Ebenso können zwei Leitstrahlen vorgesehen sein, so zur Signalisierung eines Landekurses als Information über Kurs und zur Signalisierung eines Gleitpfades als Information über Höhe. Seitens der Transporteinrichtung ist vorzugsweise eine Einrichtung zur Erfassung des Ortungssignals vorgesehen, so beispielsweise ein Instrumentenlandesystem-Empfänger. Weiter bevorzugt weist das Ortungssignal ein erstes Signal auf, welches der sich nähernden Transporteinrichtung eine seitliche Abweichung anzeigt, sowie ein zweites Signal auf, welches der sich nähernden Transporteinrichtung eine vertikale Führung gibt.

Weiter bevorzugt wird das Ortungssignal durch ein Antennensystem ausgestrahlt, wobei zur Anzeige der seitlichen Abweichung auf eine Trägerfrequenz zwei Signale in Amplitudenmodulation aufmoduliert sein können, so dass entlang einer Anfluggrundlinie ein Strahlungsmaximum liegt. Über das Antennensystem kann ein weiteres Signal abgestrahlt werden, welches ebenfalls durch Amplitudenmodulation entsteht, wobei jedoch ein reiner Trägeranteil fehlt und die Strahlungsmaxima beiderseits der Anfluggrundlinie liegen, während es auf der Anfluggrundlinie zu Null wird. Durch die sich nähernde Transporteinrichtung kann die Differenz der Modulationstiefe gemessen werden, welche in Abhängigkeit von der Position der sich an den Aufnahmebehälter nähernden Transporteinrichtung gemessen wird, und wobei die Anfluggrundlinie als Linie gebildet wird, entlang derer die Differenz der Modulationstiefe Null ist.

In analoger Weise kann das Antennensystem zur Signalisierung der vertikalen Führung für die sich nähernde Transporteinrichtung ausgestaltet sein. Weiter bevorzugt sendet das Ortungssignal in einem Frequenzbereich von 108,1 MHz bis 111,95 MHz und/oder 329 MHz bis 335 MHz. In jedem Fall ist bevorzugt das Ortungssignal derart ausgestaltet, dass die Transporteinrichtung, welche sich nach Maßgabe der Geokoordinaten dem Aufnahmebehälter bis auf einige Meter genähert hat, und dadurch das Zielareal erreicht hat, mittels des Ortungssignals bis auf wenige Zentimeter oder berührend den Aufnahmebehälter erreichen kann. Dazu ist besonders bevorzugt das Ortungssignal als elektromagnetische Welle ausgestaltet, wobei jedoch ebenso das Ortungssignal ein optisches Signal umfassen kann, so beispielsweise einen Laserstrahl.

Nach einer weiteren bevorzugten Ausgestaltung weist das Verfahren den Schritt Aufladen eines Akkumulators der unbemannten Transporteinrichtung durch den Aufnahmebehälter und/oder die Übergabeeinrichtung auf. Bevorzugt erfolgt das Aufladen des Akkumulators während und/oder nach der Übergabe der Sendung. Ebenso ist bevorzugt, dass die unbemannte Transporteinrichtung an dem Aufnahmebehälter so lange verweilt, bis dass der Akkumulator aufgeladen ist, so insbesondere bis dass der Akkumulator zu 50%, 75% oder 100% aufgeladen ist und/oder so weit aufgeladen ist, dass die unbemannte Transporteinrichtung in der Lage ist, den nächsten Aufnahmebehälter zu erreichen und/oder zu einem Ausgangspunkt zurückzufliegen. Ebenso kann vorgesehen sein, dass die unbemannte Transporteinrichtung an dem Aufnahmebehälter verweilt, bis dass die Transporteinrichtung einen neuen Auftrag zum Übergeben einer Sendung erhält. Bevorzugt erfolgt das Aufladen des Akkumulators mittels einer kabellosen Ladetechnik, so insbesondere per magnetischer Induktion.

Die Aufgabe der Erfindung wird weiterhin gelöst durch eine unbemannte Transporteinrichtung, eingerichtet zur Durchführung eines Verfahrens wie vorab beschrieben und ausgestaltet als unbemanntes Fluggerät, insbesondere als Drohne, als UAV, so insbesondere als unmanned, uninhabited und/oder unpiloted aerial vehicle, als Drohne, als Paketkopter, als Helikopter, als Multikopter, als Quadropkopter oder als Tiltwing. Weiter bevorzugt ist die Transporteinrichtung zum Transport der Sendung ausgestaltet, so insbesondere einer Sendung mit einem Gewicht von ≥ 0,01 kg, ≥ 0,1 kg, ≥ 0,2 kg, ≥ 0,5 kg, ≥ 1 kg, ≥ 2 kg, ≥ 5 kg, ≥ 10 kg und/oder ≥ 100 kg, bzw. jeweils auch keiner gleich. Bevorzugt umfasst das Fluggerät eine automatische Steuereinrichtung, welche das Fluggerät beim Start und bei der Landung, im Schwebeflug sowie in der Transition zum und vom Schwebeflug in den dynamischen Flug stabilisiert. Hierzu können gegenläufig angetriebene Rotoren vorgesehen sein, die entsprechend bezüglich ihres Schubes bzw. bezüglich des über Elektromotoren aufgebrachten Drehmoments so angesteuert werden, dass eine stabile Fluglage bereitgestellt wird. Die Steuereinrichtung, welche ein Mikroprozessor und/oder eine speicherprogrammierbare Steuerung umfassen kann, kann ferner dazu eingerichtet sein, in Kommunikationsverbindung mit der zentralen Servereinrichtung und/oder dem Aufnahmebehälter zu treten. Zudem kann das Fluggerät eine Mehrzahl von Rotoren, und ebenso starre oder flexible Tragflügel umfassen.

Schließlich weist die Transporteinrichtung nach einer weiteren bevorzugten Ausgestaltung einen Behälter auf, in dem die Sendung oder eine Mehrzahl von Sendungen, geschützt vor externen Einflüssen, wie Regen, transportiert werden kann. Der Behälter weist weiter bevorzugt eine Behälteröffnung auf, durch die die Sendung in den Behälter einführbar ist. Die Steuerungseinrichtung ist bevorzugt derart ausgestaltet, dass nach Eingabe bzw. Übertragung der Geokoordinaten an die Steuerungseinrichtung die Transporteinrichtung selbstständig das durch die Geokoordinaten definierte Zielareal erreichen kann. Das Steuerungssystem kann dazu über eine virtuelle Karte verfügen, oder aber Zugriff auf eine auf der Servereinrichtung gespeicherte virtuelle Karte haben.

In Bezug auf das Fluggerät kann die Karte ebenso Informationen darüber enthalten, dass beispielsweise ein Aufnahmebehälter nur indirekt anfliegbar ist, weil der Aufnahmebehälter durch einen Balkon oder Ähnlichem verdeckt ist, somit also nicht nach einem Flug in der Horizontalen direkt durch einen Vertikalflug hin zum Boden erreichbar ist. Für diesen Fall kann die elektronische Karte Informationen für die Steuerungseinrichtung der Transporteinrichtung aufweisen, dass nach einem Horizontalflug in Richtung des Aufnahmebehälters zunächst ein vertikaler Sinkflug vonnöten ist, um dann in einem darauffolgenden Horizontalflug den Aufnahmebehälter zu erreichen. Weiterhin ist bevorzugt, dass die Geokoordinaten nicht nur Koordinaten hinsichtlich Längen- und Breitengrad der Position des Aufnahmebehälters aufweisen, sondern ebenso Informationen zu einer Vertikalposition des Aufnahmebehälters über Null. Mittels der Vertikalposition kann das Fluggerät dann erkennen, bis auf welche Höhe es sich im Vertikalflug vom Himmel her kommend absenken muss, um auf dem Aufnahmebehälter zu landen.

Die Aufgabe der Erfindung wird zudem gelöst durch einen Aufnahmebehälter, eingerichtet zur Durchführung eines Verfahrens wie vorab beschrieben und ausgestaltet als Briefkasten, Paketkasten, Paketbriefkasten und/oder Packstation zum Aufnehmen der Sendung. Der Aufnahmebehälter weist bevorzugt ein Gehäuse auf, wobei an dem Gehäuse ein oder mehrere Türen vorgesehen sein können, durch die ein Empfänger oder Besteller der Sendung Zugriff auf die Sendung erlangen kann.

Nachfolgend wird die Erfindung unter Bezugnahme auf die anliegende Zeichnung anhand einer bevorzugten Ausführungsform näher erläutert.

Es zeigen:
- Fig. 1: ein Flussdiagramm einer beispielhaften Ausführungsform des erfindungsgemäßen Verfahrens zum Überbringen einer Sendung durch eine unbemannte Transporteinrichtung, und

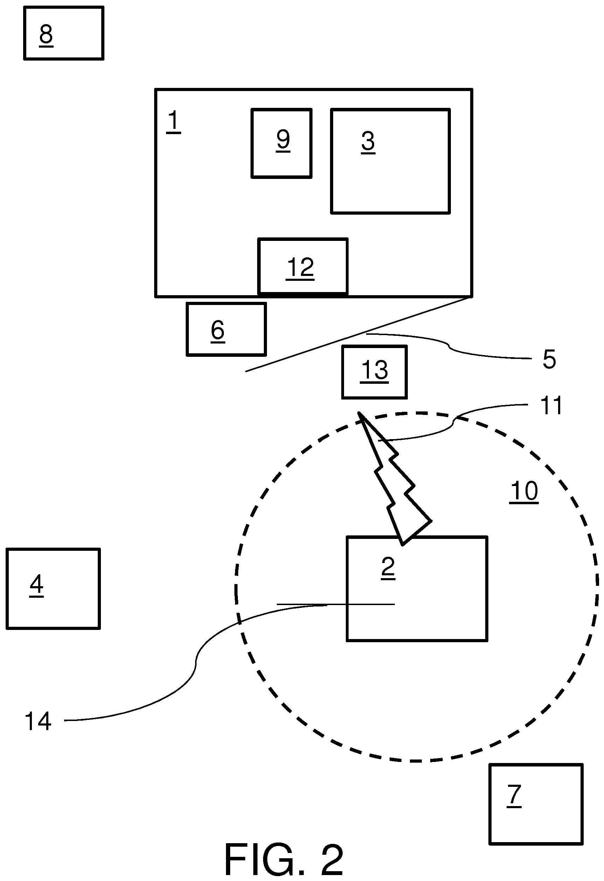

- Fig. 2: eine Ansicht einer beispielhaften Ausführungsform zur Ausführung des Verfahrens nach Fig. 1 mit Transporteinrichtung und einem Aufnahmebehälter für die Sendung.

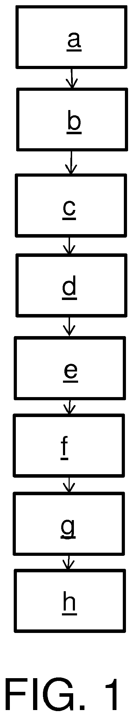

Anhand der Zeichnung wird das erfindungsgemäße Verfahren nachfolgend anhand einer besonders bevorzugten Verwendung mit einer Drohne als unbemannte Transporteinrichtung 1 als Flussdiagramm in Fig. 1 sowie als schematische Ansicht der unbemannten Transporteinrichtung 1 mit einem Aufnahmebehälter 2 beschrieben.

Die Drohne 1 weist einen Rotor, nicht gezeigt, und eine Steuerungseinrichtung 3 auf, durch welche der Flug der Drohne 1 von einem Startpunkt 4 hin zum Aufnahmebehälter 2 steuerbar ist. An der Drohne 1 ist ein Greifarm 5 vorgesehen, mittels dessen eine Sendung 6 an der Drohne 1 befestigt ist. Die Sendung 6 hat ein Empfänger 7 bei einem Versender bestellt und erwartet nunmehr die Überbringung der Sendung 6 an den Aufnahmebehälter 2. Dazu hat die Steuerungseinrichtung 3 der Drohne 1 von einer zentralen Servereinrichtung 8 Geokoordinaten des Aufnahmebehälters 2 erhalten, so Längen- und Breitengrad des Aufstellungsortes des Aufnahmebehälters 2.

Die Drohne 1 ist als unbemannte Transporteinrichtung 1 derart ausgestaltet, dass die Steuerungseinrichtung 3 die Drohne 1 selbstständig, also ohne weitere menschliche Interaktion, hin zum Aufnahmebehälter 2 bewegen kann. Dazu weist die Drohne 1 einen GPS-Empfänger 9 auf, durch den eine aktuelle geographische Position der Drohne 1 bestimmt werden kann. Ausgehend von der aktuellen Position, so initial vom Startpunkt 4, bewegt sich die Drohne in einem ersten Schritt a hin zu einem im Aufnahmebehälter 2 zugeordneten Zielareal auf Basis der Geokoordinaten.

Das Zielareal 10 ist ein um den Aufstellungsort des Aufnahmebehälters 2 gebildeter geographischer Bereich mit typischerweise kreisrunder Ausdehnung, dessen Größe durch die Ungenauigkeit des mittels des GPS-Empfängers 9 erhaltenen GPS-Signals bestimmt ist. Typischerweise beträgt die Genauigkeit einer Positionsbestimmung mittels GPS-Empfänger 9 ca. 15 m horizontal oder besser, so dass für diesen Fall das Zielareal 10 ein Kreis mit einem Durchmesser von 15 m wäre.

Nachdem die Drohne 1 im Zielareal 10 eingetroffen ist, also wenn die mittels GPS-Empfänger 9 ermittelte aktuelle Position mit dem Geokoordinaten überstimmt, informiert die Drohne 1 den Aufnahmebehälter 2, so dass der Aufnahmebehälter 2 als Reaktion auf die Information ein Ortungssignal 11 aktivieren kann. Alternativ kann es auch so sein, dass die Servereinrichtung 8 den Aufnahmebehälter 2 informiert, dass sich die Drohne 1 in Richtung des Zielareals 10 bewegt, so dass daraufhin der Aufnahmebehälter 2 das Ortungssignal 11 aktiviert.

Das Ortungssignal 11 ist durch eine elektromagnetische Welle charakterisiert, die es der Drohne 1 erlaubt, den Aufnahmebehälter 2 zentimetergenau zu lokalisieren und in der Folge auf dem Aufnahmebehälter 2 zentimetergenau zu landen. Bei einer Grundfläche von 40x40 cm der Drohne, und ebensolcher Grundfläche des als Paketkasten ausgestalteten Aufnahmebehälters 2, ist es notwendig, dass die Drohne 1 punktgenau bzw. nur mit einer Zielabweichung von wenigen Zentimetern auf dem Aufnahmebehälter 2 aufsetzt, um die Sendung 6 übergeben zu können. Insofern ist eine Ansteuerung des Aufnahmebehälters 2 nur auf Basis von GPS-Positionsdaten zu ungenau. Sofern jedoch die Drohne 1 im Zielareal 10 eingetroffen ist, erfasst die Drohne 1 das durch den Aufnahmebehälter 2 ausgesendete Ortungssignal 11, Schritt b. Dazu wirkt das Ortungssignal als sogenannter "Traktorstrahl", mittels dessen die Drohne 1 nach Eintreffen im Zielareal 10 die letzten Meter hin zum Aufnahmebehälter 2 zurücklegen kann.

Dazu kann es notwendig sein, dass die Drohne 1 zunächst im Zielareal 10 horizontal in x- und y-Richtung um jeweils einige Meter vor und zurück kreist, bis dass eine an der Drohne 1 vorgesehene Empfängereinrichtung 12 das Ortungssignal 11 erfasst hat, Schritt b. Nach Erfassen des Ortungssignals 11 nähert sich die Drohne 1 weiter an den Aufnahmebehälter 2 an, Schritt c, und landet in der Folge auf dem Aufnahmebehälter 2.

Parallel dazu erfolgt gemäß Schritt d das Austauschen einer elektrischen Berechtigungsinformation 13 zwischen der Drohne 1 und dem Aufnahmebehälter 2. Die Drohne 1 weist Landefüße auf, nicht gezeigt, mittels derer die Drohne 1 auf dem Aufnahmebehälter 2 aufsetzen kann. In den Landefüßen ist ein elektronischer Schlüssel als Berechtigungsinformation 13 angeordnet, der via Bluetooth von der Drohne 1 an den Aufnahmebehälter 2 ausgesendet wird. Der Aufnahmebehälter 2 hat von der Servereinrichtung 8 mittels drahtloser Kommunikation über ein Mobilfunknetz ebenso einen elektronischen Schlüssel erhalten, der in Schritt e mit der von der Drohne 1 ausgesendeten Berechtigungsinformation 13 verglichen wird.

Sofern nun die Überprüfung der Berechtigungsinformation 13 durch den Aufnahmebehälter 2 ergeben hat, dass die Drohne 1 berechtigt ist, stellt der Aufnahmebehälter 2 eine Übergabeeinrichtung 14 für die Sendung 6 bereit, Schritt f. Die Übergabeeinrichtung 14 ist vorliegend als ausfahrbare Andockeinrichtung 14 für die Drohne 1 ausgestaltet, so konkret als Plattform, auf der die Drohne 1 landen kann.

Nachdem die Drohne 1 auf der Übergabeeinrichtung 14 gelandet ist, kann die Sendung 6 von der Drohne 1 auf die Übergabeeinrichtung abgesenkt werden, also dadurch an die Übergabeeinrichtung 14 übergeben werden, Schritt g. Die Übergabe kann durch den Aufnahmebehälter 2 dokumentiert werden, wobei ebenso sendungsspezifische Daten der Sendung 6 erfasst werden können. Die sendungsspezifischen Daten können durch den Aufnahmebehälter 2 an die Servereinrichtung 8 übermittelt werden, so dass dadurch die erfolgreiche Übergabe der Sendung 6 dokumentierbar ist. Ebenso kann der Aufnahmebehälter 2 eine Anzeigeeinrichtung aufweisen, an der die erfolgreiche Übergabe der Sendung für den Empfänger 7 signalisierbar ist.

Nachdem nun die Sendung 6 gemäß Schritt g von der Drohne 1 an den Aufnahmebehälter 2 übergeben worden ist, fliegt im letzten Schritt des vorgeschlagenen Verfahrens die Drohne 1 wieder von dem Aufnahmebehälter 2 weg, Schritt h. Die Übergabeeinrichtung 14 fährt daraufhin wieder ein, so dass die Sendung 6 in einen Innenraum des Aufnahmebehälters 2 befördert wird. Über eine Türe, nicht gezeigt, des Aufnahmebehälters 2 kann dann der Empfänger 7 Zugriff auf die derart übergebene Sendung 6 erhalten und diese von dem Aufnahmebehälter 2 abholen.

**Bezugszeichenliste**

| | |
|---|---|
| Unbemannte Transporteinrichtung, Drohne | 1 |
| Aufnahmebehälter | 2 |
| Steuerungseinrichtung | 3 |
| Startpunkt | 4 |
| Greifarm | 5 |
| Sendung | 6 |
| Empfänger | 7 |
| Servereinrichtung | 8 |
| GPS-Empfänger | 9 |
| Zielareal | 10 |
| Ortungssignal | 11 |
| Empfängereinrichtung | 12 |
| Berechtigungsinformation | 13 |
| Übergabeeinrichtung | 14 |

## Patentansprüche

1. Verfahren zum Überbringen einer Sendung durch eine flugfähige unbemannte Transporteinrichtung (1) an einem Aufnahmebehälter (2) für die Sendung (6), mit den Schritten:
Bewegen der unbemannten Transporteinrichtung (1) in ein dem Aufnahmebehälter (2) zugeordnetes Zielareal (10) auf Basis von Geokoordinaten (a),
nach Eintreffen der unbemannten Transporteinrichtung (1) im Zielareal (10), Pairen der Transporteinrichtung (1) mit dem Aufnahmebehälter (2),
Austauschen einer elektronischen Berechtigungsinformation (13) zwischen dem Aufnahmebehälter (2) und der unbemannten Transporteinrichtung (1) (d),
Prüfen der Berechtigungsinformation (13) hinsichtlich einer Berechtigung durch den Aufnahmebehälter (2) (e),
bei Berechtigung, Aktivieren einer Übergabeeinrichtung (14) für die Sendung (6) durch den Aufnahmebehälter (2) (f) durch Öffnen einer Öffnung in einem Dach oder einer Seitenwand des Aufnahmebehälters (2) zum Einstellen und/oder Abholen einer Sendung (6) in/aus dem Aufnahmebehälter (2), und
Übergeben der Sendung (6) von der unbemannten Transporteinrichtung (1) an die Übergabeeinrichtung (14) und/oder von der Übergabeeinrichtung (14) an die unbemannte Transporteinrichtung (1) durch die unbemannte Transporteinrichtung (1), durch die Übergabeeinrichtung (14) und/oder durch den Aufnahmebehälter (2) (g).

2. Verfahren nach dem vorhergehenden Anspruch, mit dem Schritt
Wegbewegen der unbemannten Transporteinrichtung (1) von dem Aufnahmebehälter (2) (h), und/oder
Deaktivieren der Übergabeeinrichtung (14).

3. Verfahren nach einem der vorhergehenden Ansprüche, wobei der Schritt Pairen der Transporteinrichtung (1) mit dem Aufnahmebehälter (2) ein Erfassen eines durch den Aufnahmebehälter (2) ausgesendeten Ortungssignals (11) durch die unbemannte Transporteinrichtung (1) (b) umfasst, und mit dem weiteren Schritt:
Bewegen der unbemannten Transporteinrichtung (1) hin zu dem Aufnahmebehälter auf Basis des Ortungssignals (11) (c).

4. Verfahren nach dem vorhergehenden Anspruch, mit dem Schritt
Informieren des Aufnahmebehälters (2), dass sich die unbemannte Transporteinrichtung (1) in das Zielareal (10) bewegt, und
als Reaktion auf die Information, Pairen der Transporteinrichtung (1) mit dem Aufnahmebehälter (2), insbesondere Aktivieren des Ortungssignals (11) durch den Aufnahmebehälter (2) nach Anspruch 2.

5. Verfahren nach einem der vorhergehenden Ansprüche, wobei die Übergabeeinrichtung (14) automobil ausgestaltet ist.

6. Verfahren nach einem der drei vorhergehenden Ansprüche, wobei der Schritt Annähern der unbemannten Transporteinrichtung (1) an den Aufnahmebehälter (2) ein positionsspezifischen Verbinden, insbesondere Andocken der unbemannten Transporteinrichtung (1) an den Aufnahmebehälter (2) umfasst.

7. Verfahren nach einem der vorhergehenden Ansprüche, wobei die elektronische Berechtigungsinformation (13) ein Bluetooth, WLAN, GSM, NFC, RFID und/oder ein elektronisches Funksignal umfasst.

8. Verfahren nach einem der vorhergehenden Ansprüche, wobei
das Austauschen der elektronischen Berechtigungsinformation (13) ein Aussenden der elektronischen Berechtigungsinformation (13) durch die unbemannte Transporteinrichtung (1) an den Aufnahmebehälter (2) umfasst;
die Berechtigungsinformation (13) auf einer tragbaren elektronischen Einrichtung an der unbemannten Transporteinrichtung (1) gespeichert ist, insbesondere auf einem RFID- oder NFC-Tag; und/oder
die Berechtigungsinformation (13) eine zeitlich beschränkte Gültigkeit aufweist und/oder nach einer vordefinierten Anzahl von Verwendungen zum Nachweis der Berechtigung ungültig wird.

9. Verfahren nach einem der vorhergehenden Ansprüche, wobei das Übergeben der Sendung ein Absenken der Sendung (6) von der unbemannten Transporteinrichtung (1) und/oder ein Anheben der Übergabeeinrichtung (14) und/oder der Sendung (6) durch den Aufnahmebehälter (2) und/oder durch die Übergabeeinrichtung (14) umfasst.

10. Verfahren nach einem der vorhergehenden Ansprüche, mit dem Schritt
Greifen, Einhaken und/oder Ansaugen der Sendung (6) durch die unbemannte Transporteinrichtung (1) und/oder den Aufnahmebehälter (2) zum Übergeben der Sendung (6);
Erfassen, Dokumentieren, Fotografieren, Filmen und/oder Scannen des Übergebens der Sendung (6) zwischen unbemannter Transporteinrichtung (1) und Aufnahmebehälter (2) und/oder der Sendung (6) beim Übergeben der Sendung (6); und/oder
Elektronisches Übermitteln einer Nachricht an den Aufnahmebehälter (2), dass sich die unbemannte Transporteinrichtung (1) zum Aufnahmebehälter (2) bewegt, und/oder elektronisches Übermittelen einer Übergabenachricht nach erfolgter Übergabe der Sendung (6) durch den Aufnahmebehälter (2).

11. Verfahren nach einem der vorhergehenden Ansprüche 3 bis 10, wobei das Ortungssignal (11) als Leitstrahl, durch ein Instrumentenlandesystem und/oder als horizontales und vertikales Führungssignal ausgestaltet ist.

12. Verfahren nach einem der vorhergehenden Ansprüche, mit dem Schritt
Aufladen eines Akkumulators der unbemannten Transporteinrichtung (1) durch den Aufnahmebehälter (2) und/oder die Übergabeeinrichtung (14).

13. Aufnahmebehälter (2), eingerichtet zur Durchführung eines Verfahrens nach einem der vorhergehenden Ansprüche und ausgestaltet als Briefkasten, Paketkasten, Paketbriefkasten und/oder Packstation zum Aufnehmen der Sendung (6).

14. System, umfassend den Aufnahmebehälter (2) nach Anspruch 13 sowie die unbemannte Transporteinrichtung (1), eingerichtet zur Durchführung eines Verfahrens nach einem der vorhergehenden Ansprüche 1 bis 12 und ausgestaltet als Fluggerät, insbesondere als Luftfahrzeug, als UAV, als Drohne, als Paketkopter, als Helikopter, als Multikopter, als Quadropkopter oder als Tiltwing.

## Claims

1. Method for delivering a shipment by an unmanned transport device (1), which is capable of flying, to a receptacle container (2) for the shipment (6), having the steps:
moving the unmanned transport device (1) into a target area (10), assigned to the receptacle container (2), on the basis of geographic coordinates (a),
after the arrival of the unmanned transport device (1) in the target area (10), pairing the transport device (1) with the acceptable container (2),
exchanging an electronic authorization information item (13) between the receptacle container (2) and the unmanned transport device (1)(d),
checking the authorization information item (13) with respect to an authorization by the receptacle container (2) (e),
in the case of authorization, activating a delivery device (14) for the shipment (6) by the receptacle container (2) (f) by opening an opening in a roof or a side wall of the receptacle container (2) for inputting and/or retrieving a shipment (6) into/from the receptacle container (2), and
delivering the shipment (6) from the unmanned transport device (1) to the delivery device (14) and/or from the delivery device (14) to the unmanned transport device (1) by the unmanned transport device (1), by the delivery device (14) and/or by the receptacle container (2) (g) .

2. Method according to the preceding claim, having the step
moving the unmanned transport device (1) away from the receptacle container (2) (h), and/or
deactivating the delivery device (14).

3. Method according to either of the preceding claims, wherein the step of pairing the transport device (1) with the receptacle container (2) comprises sensing a locating signal (11), emitted by the receptacle container (2), by the unmanned transport device (1) (b), and having the further step:
moving the unmanned transport device (1) to the receptacle container on the basis of the locating signal (11) (c) .

4. Method according to the preceding claim, having the step
informing the receptacle container (2) that the unmanned transport device (1) is moving into the target area (10), and
in reaction to the information, pairing the transport device (1) with the receptacle container (2), in particular activating the locating signal (11) by the receptacle container (2) according to Claim 2.

5. Method according to one of the preceding claims, wherein the delivery device (14) is configured in an automotive fashion.

6. Method according to one of the three preceding claims, wherein the step of making the unmanned transport device (1) approach the receptacle container (2) comprises a position-specific connection, in particular docking the unmanned transport device (1) with the receptacle container (2).

7. Method according to one of the preceding claims, wherein the electronic authorization information item (13) comprises a Bluetooth, WLAN, GSM, NFC, RFID signal and/or an electronic radio signal.

8. Method according to one of the preceding claims, wherein
the exchanging of the electronic authorization information item (13) comprises emitting the electronic authorization information item (13) by the unmanned transport device (1) to the receptacle container (2);
the authorization information item (13) is stored on a portable electronic device on the unmanned transport device (1), in particular on an RFID or NFC tag; and/or
the authorization information item (13) has a chronologically limited validity and/or becomes invalid after a predefined number of uses for proving the authorization.

9. Method according to one of the preceding claims, wherein the delivery of the shipment comprises lowering the shipment (6) from the unmanned transport device (1) and/or raising the delivery device (14) and/or the shipment (6) by the receptacle container (2) and/or by the delivery device (14).

10. Method according to one of the preceding claims, having the step
gripping, hooking in and/or sucking in the shipment (6) by the unmanned transport device (1) and/or the receptacle container (2) for the delivery of the shipment (6) ;
sensing, documenting, photographing, filming and/or scanning the delivery of the shipment (6) between the unmanned transport device (1) and the receptacle container (2) and/or the shipment (6) when the shipment (6) is delivered; and/or
electronically transmitting a message to the receptacle container (2) that the unmanned transport device (1) is moving to the receptacle container (2), and/or electronically transmitting a delivery message after delivery of the shipment (6) has taken place, by the receptacle container (2).

11. Method according to one of the preceding Claims 3 to 10, wherein the locating signal (11) is configured as a guiding beam, by an instrument landing system and/or as a horizontal and vertical guide signal.

12. Method according to one of the preceding claims, having the step
charging an accumulator of the unmanned transport device (1) by the receptacle container (2) and/or the delivery device (14).

13. Receptacle container (2) configured to carry out a method according to one of the preceding claims and configured as a letterbox, parcel box, parcel and letterbox and/or packing station for receiving the shipment (6).

14. System comprising the receptacle container (2) according to Claim 13 and the unmanned transport device (1), configured to carry out a method according to one of the preceding Claims 1 to 12 and configured as a flying machine, in particular as an aircraft, as a UAV, as a drone, as a parcelcopter, as a helicopter, as a multicopter, as a quadcopter or as a tiltwing.

## Revendications

1. Procédé destiné à remettre une expédition par un dispositif de transport (1) sans pilote capable de voler à un conteneur d'accueil (2) pour l'expédition (6), comprenant les étapes suivantes :
déplacement du dispositif de transport (1) sans pilote dans une zone de distribution cible (10) associée au conteneur d'accueil (2) sur la base de coordonnées géographiques (a),
après l'arrivée du dispositif de transport (1) sans pilote dans la zone de distribution cible (10), appariement du dispositif de transport (1) avec le conteneur d'accueil (2),
échange d'une information d'autorisation électronique (13) entre le conteneur d'accueil (2) et le dispositif de transport (1) sans pilote (d),
contrôle de l'information d'autorisation (13) concernant une autorisation par le conteneur d'accueil (2) (e),
en présence d'une autorisation, activation d'un dispositif de transfert (14) pour l'expédition (6) par le conteneur d'accueil (2) (f) en ouvrant une ouverture dans un toit ou une paroi latérale du conteneur d'accueil (2) en vue de placer et/ou d'enlever une expédition (6) dans/du conteneur d'accueil (2) et
transfert de l'expédition (6) du dispositif de transport (1) sans pilote au dispositif de transfert (14) et/ou du dispositif de transfert (14) au dispositif de transport (1) sans pilote par le dispositif de transport (1) sans pilote, par le dispositif de transfert (14) et/ou par le conteneur d'accueil (2) (g).

2. Procédé selon la revendication précédente, comprenant l'étape
éloignement du dispositif de transport (1) sans pilote du conteneur d'accueil (2) h) et/ou
désactivation du dispositif de transfert (14).

3. Procédé selon l'une des revendications précédentes, l'étape d'appariement du dispositif de transport (1) avec le conteneur d'accueil (2) comprenant une acquisition, par le dispositif de transport (1) sans pilote, d'un signal de localisation (11) émis par le conteneur d'accueil (2) (b), et comprenant l'étape supplémentaire :
déplacement du dispositif de transport (1) sans pilote en direction du conteneur d'accueil sur la base du signal de localisation (11) (c).

4. Procédé selon la revendication précédente, comprenant l'étape
information du conteneur d'accueil (2) que le dispositif de transport (1) sans pilote se déplace dans la zone de distribution cible (10) et
en réaction à l'information, appariement du dispositif de transport (1) avec le conteneur d'accueil (2), notamment activation du signal de localisation (11) par le conteneur d'accueil (2) selon la revendication 2.

5. Procédé selon l'une des revendications précédentes, le dispositif de transfert (14) étant de configuration automobile.

6. Procédé selon l'une des trois revendications précédentes, l'étape d'approche du dispositif de transport (1) sans pilote au conteneur d'accueil (2) comprenant une connexion spécifique à la position, notamment un accostage du dispositif de transport (1) sans pilote au conteneur d'accueil (2).

7. Procédé selon l'une des revendications précédentes, l'information d'autorisation électronique (13) comprenant un signal radioélectrique Bluetooth, WLAN, GSM, NFC, RFID et/ou électronique.

8. Procédé selon l'une des revendications précédentes, selon lequel
l'échange de l'information d'autorisation électronique (13) comprend une émission de l'information d'autorisation électronique (13) par le dispositif de transport (1) sans pilote au conteneur d'accueil (2) ; l'information d'autorisation électronique (13) est enregistrée sur un dispositif électronique portable sur le dispositif de transport (1) sans pilote, notamment sur une étiquette RFID ou NFC ; et/ou
l'information d'autorisation électronique (13) possède une validité limitée dans le temps et/ou elle devient invalide après un nombre prédéfini d'utilisations pour prouver l'autorisation.

9. Procédé selon l'une des revendications précédentes, selon lequel le transfert de l'expédition comprenant un abaissement de l'expédition (6) depuis le dispositif de transport (1) sans pilote et/ou un levage du dispositif de transfert (14) et/ou de l'expédition (6) par le conteneur d'accueil (2) et/ou par le dispositif de transfert (14).

10. Procédé selon l'une des revendications précédentes, comprenant l'étape
préhension, accrochage et/ou aspiration de l'expédition (6) par le dispositif de transport (1) sans pilote et/ou le conteneur d'accueil (2) en vue de transférer l'expédition (6) ;
détection, documentation, photographie, filmage et/ou lecture par balayage du transfert de l'expédition (6) entre le dispositif de transport (1) sans pilote et le conteneur d'accueil (2) et/ou de l'expédition (6) lors du transfert de l'expédition (6) ; et/ou
communication électronique d'un message au conteneur d'accueil (2), selon lequel le dispositif de transport (1) sans pilote se déplace vers le conteneur d'accueil (2) et/ou communication électronique d'un message de transfert après le transfert réussi de l'expédition (6) par le conteneur d'accueil (2).

11. Procédé selon l'une des revendications 3 à 10, le signal de localisation (11) étant réalisé sous la forme d'un faisceau directeur, par un système d'atterrissage aux instruments et/ou sous la forme d'un signal de guidage horizontal et vertical.

12. Procédé selon l'une des revendications précédentes, comprenant l'étape
charge d'un accumulateur du dispositif de transport (1) sans pilote par le conteneur d'accueil (2) et/ou le dispositif de transfert (14).

13. Conteneur d'accueil (2), conçu pour mettre en oeuvre un procédé selon l'une des revendications précédentes et réalisé sous la forme d'une boîte aux lettres, d'une boîte à colis, d'une boîte à lettres et à colis et/ou d'une station de consigne automatique servant à recevoir l'expédition (6).

14. Système, comprenant le conteneur d'accueil (2) selon la revendication 13 ainsi que le dispositif de transport (1) sans pilote, conçu pour mettre en oeuvre un procédé selon l'une des revendications précédentes 1 à 12 et réalisé sous la forme d'un engin volant, notamment sous la forme d'un aéronef, d'un UAV, d'un drone, d'un « Paketkopter », d'un hélicoptère, d'un multicoptère, d'un quadricoptère ou d'une aile basculante.
